(19) Europäisches Patentamt
European Patent Office
Office européen des brevets

(11) **EP 1 923 663 A1**

(12) **EUROPEAN PATENT APPLICATION**

(43) Date of publication:
**21.05.2008 Bulletin 2008/21**

(51) Int Cl.:
*G01B 11/03* (2006.01)    *B25J 9/16* (2006.01)

(21) Application number: **07021698.1**

(22) Date of filing: **08.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.11.2006 JP 2006306406**

(71) Applicant: **KONICA MINOLTA SENSING, INC.**
**Sakai-shi,**
**Osaka 590-8551 (JP)**

(72) Inventor: **Morimoto, Koji**
**Sakai-shi, Osaka 590-8551 (JP)**

(74) Representative: **HOFFMANN EITLE**
**Patent- und Rechtsanwälte**
**Arabellastrasse 4**
**81925 München (DE)**

(54) **Measuring device, positioning system and positioning method**

(57)   In a positioning system and a positioning method of the invention, a relative position displacement amount and a relative angle displacement amount between a measurement object and a measuring device (2) are calculated, based on three-dimensional data on a stereoscopic object as the measurement object e.g. a calibration chart (31) measured by the measuring device (2), and reference information serving as a reference in positioning between the measuring device (2) and the measurement object. The position and the angle of the measurement object are adjusted based on the calculation result. The positioning system and the positioning method are advantageous in performing positioning with ease and high precision.

FIG.1

EP 1 923 663 A1

**Description**

This application is based on Japanese Patent Application No. 2006-306406 filed on November 13, 2006, the contents of which are hereby incorporated by reference.

The present invention relates to a positioning device, a positioning system, and a positioning method for positioning a measurement object relative to the measuring device.

Conventionally, a method for performing three-dimensional measurement of a measurement object i.e. measuring a three-dimensional shape of the measurement object by a non-contact three-dimensional measuring device (hereinafter, also called as "measuring device") has been utilized in various industrial fields including CG (Computer Graphics), designing, and automobile manufacturing. Examples of the known measurement principles on three-dimensional measurement are: a light section method using laser slit light or the like; a pattern projection method using pattern light; a stereoscopic method based on an image captured by a camera in different viewing directions with respect to a common measurement object; and a moire method using a moire image for obtaining measurement data to acquire three-dimensional data including polygon data based on the measurement data.

It is important to secure measurement accuracy in the non-contact three-dimensional measuring device. In view of this, the measuring device is shipped after calibration and accuracy test are performed in a factory or a like site. However, accuracy errors may occur in the measuring device depending on the user's measurement environment for the following factors, for instance, despite the calibration or the accuracy test:

· expansion or contraction of a mechanical component resulting from an environmental change in temperature or humidity, or a change in electric characteristic;
· distortion of a mechanical component or an optical system resulting from a change in posture of the measuring device;
· displacement of an optical system by lens exchange i.e. lens detachment/attachment, in the case where the measuring device is of a lens exchangeable type.

Under the above circumstances, it is required to perform calibration to eliminate the aforementioned accuracy errors in the user's measurement environment. The calibration is called "user calibration". Generally, in performing user calibration, a calibration chart is measured. The calibration chart is a measurement object for use in calibration, and has known dimensions. In user calibration, various calibration parameters are optimized in such a manner as to minimize a difference between the dimensions of a measurement object obtained by actual measurement and the known dimensions of the measurement object.

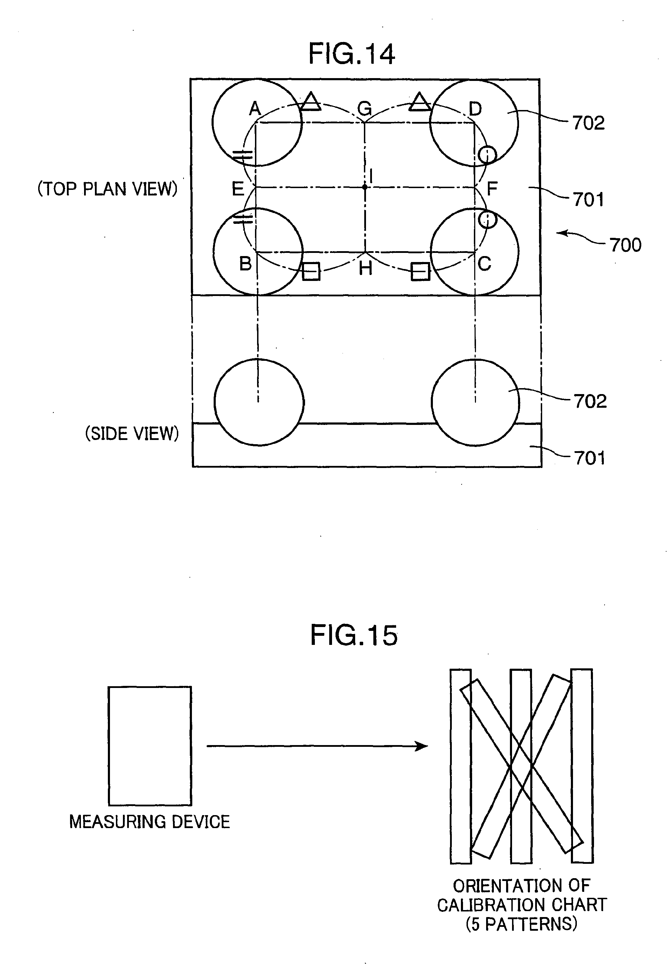

In performing measurement in the user calibration, it is required to determine a positional relation between the measuring device and the calibration chart i.e. the measurement object, in other words, perform positioning between the measurement device and the calibration chart. One or more patterns are defined, as the positional relation between the measuring device and the calibration chart. For instance, seven patterns are defined as the positional relation: a pattern in which the calibration chart opposes to the measuring device in parallel at a close position; a pattern in which the calibration chart opposes to the measuring device in parallel at a far position; a pattern in which the calibration chart opposes to the measuring device in parallel at a middle position between the close position and the far position; a pattern in which the calibration chart is oriented obliquely upwardly with respect to the measuring device; a pattern in which the calibration chart is oriented obliquely downwardly with respect to the measuring device; a pattern in which the calibration chart is oriented obliquely rightwardly with respect to the measuring device; and a pattern in which the calibration chart is oriented obliquely leftwardly with respect to the measuring device. FIG. 15 shows five patterns as the positional relation: a pattern in which the calibration chart opposes to the measuring device at the close position; a pattern in which the calibration chart opposes to the measuring device at the middle position, a pattern in which the calibration chart opposes to the measuring device at the far position; a pattern in which the calibration chart is oriented obliquely upwardly with respect to the measuring device; and a pattern in which the calibration chart is oriented obliquely downwardly with respect to the measuring device.

Concerning the positioning between a calibration chart and a measuring device, there is known a positioning method, in which a calibration chart and a measuring device are fixedly mounted on a predetermined support member e.g. a frame i.e. a calibration chart supporting frame, in other words, a positioning method using a jig. This method, however, has the following drawbacks:

· If an installation site of the calibration chart is not flat, the calibration chart supporting frame may be skewed, which may resultantly displace the calibration chart relative to the measuring device, and decrease the calibration precision.
· In the case where the measuring device is attached to a stand or a like member, it takes a time to temporarily detach the measuring device from the stand and mount the measuring device to the frame. Also, the measuring device may be damaged or broken by dropping or a like incident. If the measuring device is heavy, a further burden is imposed on the user in detaching or attaching the measurement device.

· Since calibration is performed solely in a specific posture e.g. a posture that the measuring device opposes to the calibration chart in parallel, calibration cannot be performed in the same posture as in actual measurement. In other words, a measurement value may include a measurement error resulting from flexure or distortion of the components of the measuring device depending on a change in posture, in other words, a posture difference or a measurement error in triangulation resulting from a change in baseline length between a light emitter and a light receiver of a measuring device to be described later in the embodiment.

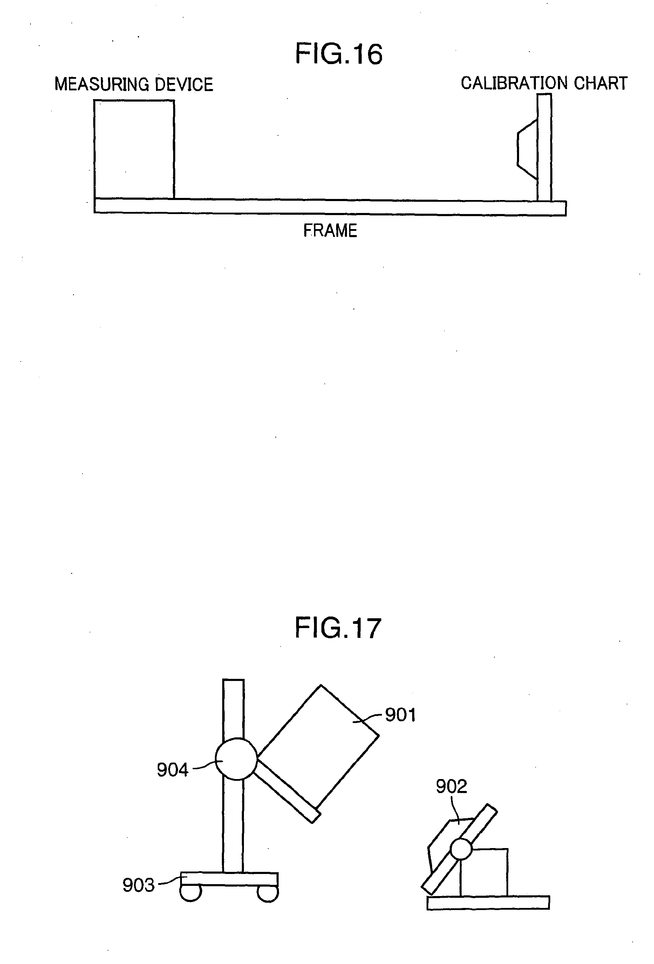

· If the frame is long, a sufficient space for holding the frame is required (see FIG. 16).

Concerning the positioning, Japanese Unexamined Patent Publication No. 2000-97636 discloses a technology. Specifically, as shown in FIG. 17, a two-dimensional image as a monitor image of a measurement object 902 is captured by a measuring device 901. When a user designates a reference point on the two-dimensional image, a position adjusting mechanism 903 and an angle adjusting mechanism 904 are operative to automatically control the position and the angle of the measuring device 901 relative to the measurement object 902 in such a manner that the reference point is coincident with the origin i.e. the center of a coordinate system of the measuring device 901. This technology, however, has the following drawbacks.

· User's designation of a reference point for positioning is included in an operation procedure, which makes it impossible to automatically perform positioning.

· A stereoscopic object whose shape is known is not included in the measurement object.

· In performing calibration based on multiple positional relations e.g. oblique directions, it is necessary to move the measuring device in the vicinity of the calibration chart, for instance, by changing the installation site of the measuring device or changing the position or orientation of the measuring device. This requires a large space as an installation space or a moving space for the calibration.

· In performing calibration based on multiple positional relations, since the measuring device is moved as mentioned above, calibration at the same posture as in actual measurement may be impossible, in other words, a posture difference may occur.

· In a method for designating a point with respect to a two-dimensional image, precise positioning concerning the position or the angle of the image is difficult, although rough positioning is possible.

In view of the above problems residing in the conventional examples, it is an object of the invention to provide a measuring device, a positioning system, and a positioning method that enable to easily perform positioning, without the need of a large space and user's designation of a reference point, and perform positioning with high precision by eliminating a posture difference or a like drawback.

In a measuring device, a positioning system, and a positioning method according to an aspect of the invention, a relative position displacement amount and a relative angle displacement amount between a measurement object and a measuring section are calculated, based on three-dimensional data on a stereoscopic object as the measurement object measured by the measuring section, and reference information serving as a reference in positioning between the measuring section and the measurement object. Accordingly, the inventive positioning system and the inventive positioning method are advantageous in performing positioning with ease and high precision.

These and other objects, features and advantages of the present invention will become more apparent upon reading the following detailed description along with the accompanying drawings, in which:

FIG. 1 is a schematic diagram showing a three-dimensional measuring system, as an example of a positioning system embodying the invention;

FIGS. 2A through 2C are diagrams for describing a change in posture of a measuring device, and a change in orientation of a measuring device coordinate system, wherein FIG. 2A shows a case that the measuring device is oriented horizontally, FIG. 2B shows a case that the measuring device is oriented obliquely downwardly, and FIG. 2C shows a case that the measuring device is oriented vertically downwardly;

FIG. 3 is a diagram showing an example of a calibration chart;

FIG. 4 is a perspective view showing an example of a position/angle adjusting mechanism;

FIG. 5 is a diagram for describing an angle absolute value to be used in detecting a posture of the calibration chart by the position/angle adjusting mechanism;

FIG. 6 is a functional block diagram showing an example of a main controller;

FIG. 7 is a diagram for describing an approach of calculating an XYZ position displacement vector by a displacement vector calculator;

FIG. 8 is a diagram for describing an approach of calculating an XY-axis angle displacement vector by the displacement vector calculator;

FIG. 9 is a diagram for describing an approach of calculating a Z-axis angle displacement vector by the displacement vector calculator;

FIG. 10 is a diagram for describing an approach of transforming a measurement device coordinate system into a calibration device coordinate system;

FIG. 11 is a diagram for describing an approach of calculating an X-axis angle displacement amount based on a measurement normal vector and a reference normal vector;

FIG. 12 is a flowchart for describing an example of an overall operation concerning positioning by the three-dimensional measuring system;

FIG. 13 is a flowchart for describing an example of a detailed operation of calculating an adjusting parameter in Step S2 in FIG. 12;

FIG. 14 is a diagram showing a modification of the calibration chart;

FIGS. 15 through 17 are diagrams for describing the conventional art.

In the following, an embodiment of the invention is described referring to the drawings.

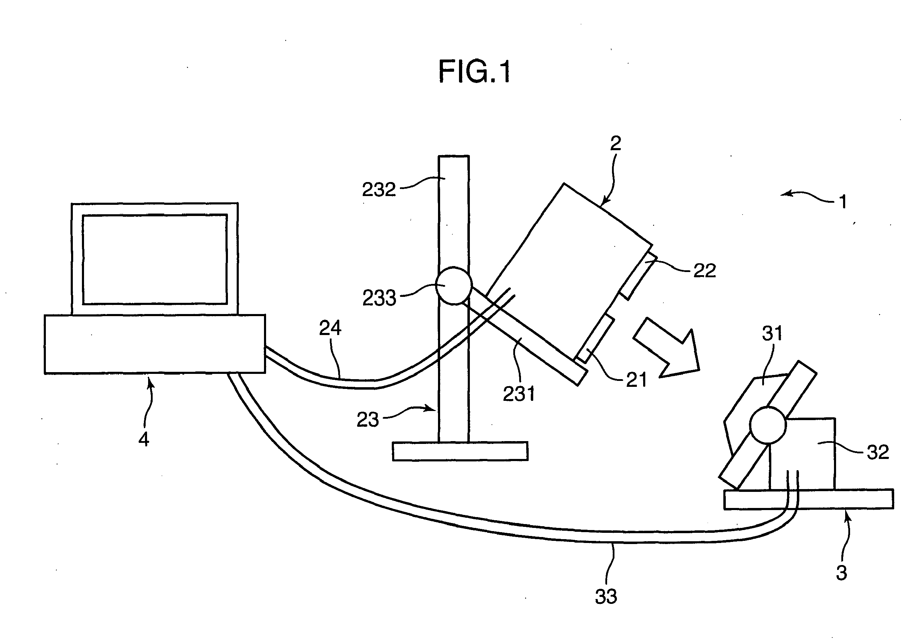

FIG. 1 is a schematic diagram showing a three-dimensional measuring system 1, as an example of a positioning system embodying the invention. The three-dimensional measuring system 1 includes a measuring device 2, a calibration device 3, and an information processor 4. The measuring device 2 is a so-called non-contact three-dimensional measuring device for three-dimensionally measuring the shape of a measurement object in a non-contact state. The measuring device 2 has a light projector 21 and a light receiver 22 on a front surface of the measuring device 2 i. e. a surface opposing to a calibration chart to be described later. The measuring device 2 is constructed in such a manner that the light projector 21 projects light i.e. a light flux to illuminate the measurement object such as the calibration chart to be described later, and the light receiver 22 receives reflected light from the measurement object illuminated with the light to convert the received light into a light receiving signal to acquire three-dimensional measurement data on the measurement object. Three-dimensional measurement to be performed by the measuring device 2 is a measurement based on a triangulation principle.

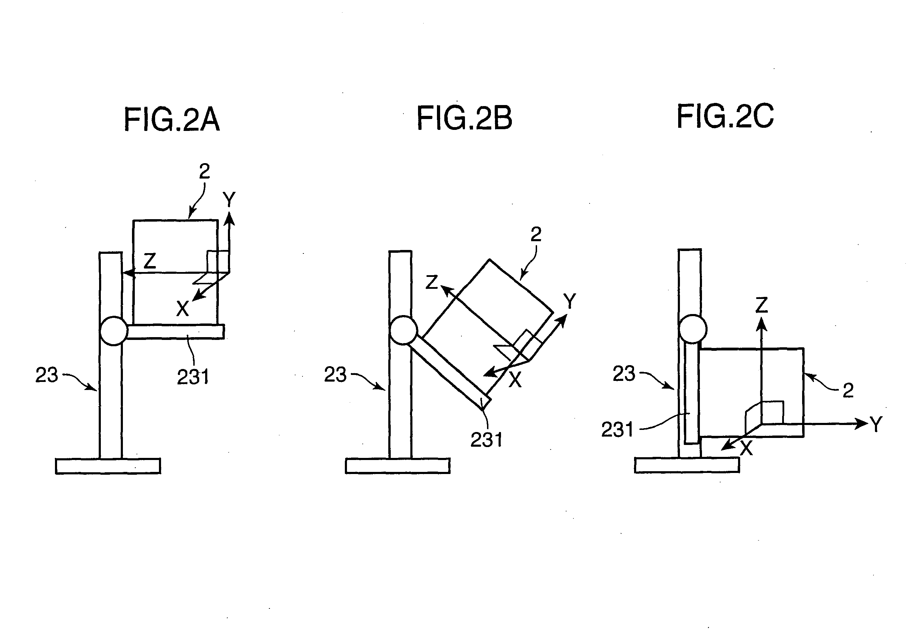

The measuring device 2 has a support block e.g. a stand 23, and is fixedly mounted on the stand 23. The stand 23 includes a frame body 231 for supporting the measuring device 2, and a fixing member 233 for fixing the frame body 231 in a certain direction (obliquely downwardly in FIG. 1) in a state that the measuring device 2 is supported on the frame body 231 by e.g. restricting a pivotal movement of the frame body 231 with respect to a stand body 232. The coordinate system of the measuring device 2 (hereinafter, called as "measuring device coordinate system") is a local coordinate system defined by the measuring device 2. If the local coordinate system is viewed from a world coordinate system, as shown in FIGS. 2A through 2C, as the posture of the measuring device 2 is changed, the orientation of the measuring device coordinate system is changed. In this embodiment, X-Y axes are defined on a plane corresponding to the front surface of the measuring device 2. In the example shown in FIG. 2A, the X-axis extends forwardly on the plane of FIG. 2A, the Y-axis extends vertically upwardly in FIG. 2A, and the Z-axis extends in a direction opposite to the front surface of the measuring device 2 i. e. rearwardly of the measuring device 2. The measuring device 2 is connected to the information processor 4 by a communication cable 24 so that data is transmittable and receivable to and from the information processor 4. A power source of the measuring device 2 may be provided in the measuring device 2, or provided externally.

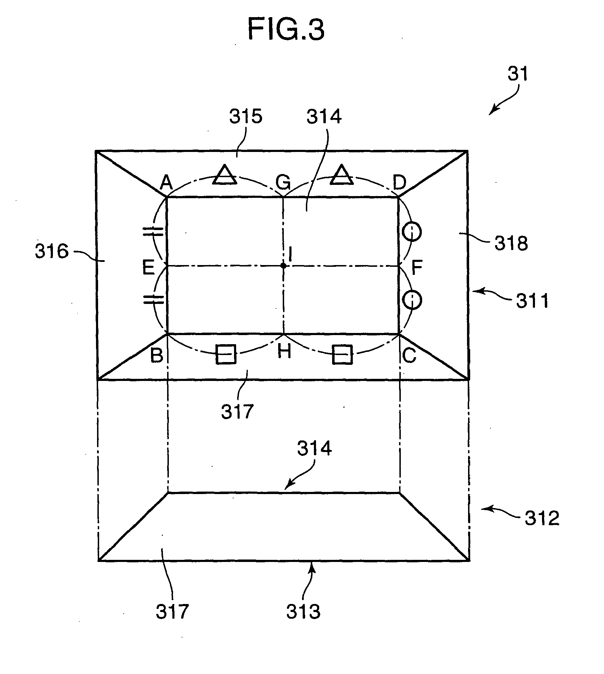

The calibration device 3 calibrates the measuring device 2 in measuring the measurement object by the measuring device 2. In the three-dimensional measuring system 1, a calibration chart 31 of the calibration device 3 is disposed as opposed to the measuring device 2. The calibration device 3 has the calibration chart 31 and a position/angle adjusting mechanism 32. The calibration chart 31 is a stereoscopic object as shown in e.g. FIG. 3 to be used as a reference in performing the calibration i.e. a reference stereoscopic object. In this embodiment, the reference stereoscopic object is called as a "calibration chart".

Referring to FIG. 3, an upper drawing indicated by the reference numeral 311 is a top plan view of the calibration chart 31 opposing to the front surface of the measuring device 2, and a lower drawing indicated by the reference numeral 312 is a side view of the calibration chart 31. The calibration chart 31 has a pyramidal frustum shape obtained by chopping the top off a pyramid (in this example, quadrangular pyramid). In other words, the calibration chart 31 is a stereoscopic object called a trapezoid body, which has a rectangular shape in plan view, and a trapezoidal shape in side view. Specifically, the calibration chart 31 has a stereoscopic shape enclosed by a rectangular bottom surface 313, a rectangular top surface 314 parallel to the bottom surface 313, and four trapezoidal side surfaces 315, 316, 317, 318 respectively adjoining four sides of the bottom surface 313 and four sides of the top surface 314. Alternatively, the calibration chart 31 may be e. g. a trapezoid body having a square shape in plan view, in place of the trapezoid body as shown in FIG. 3. Assuming that midpoint of the sides AB, BC, CD, and DA of the top surface 314 are points "E", "H", "F", and "G", respectively, an intersection between the line segment EF and the line segment GH is defined as a point "I". Alternatively, an intersection between the diagonal AC and the diagonal BD of the top surface 314 may be defined as the point "I". The top surface 314 of the calibration chart 31 may be expressed as a plane ABCD defined by the points "A", "B", "C", and "D" when such a description is necessary.

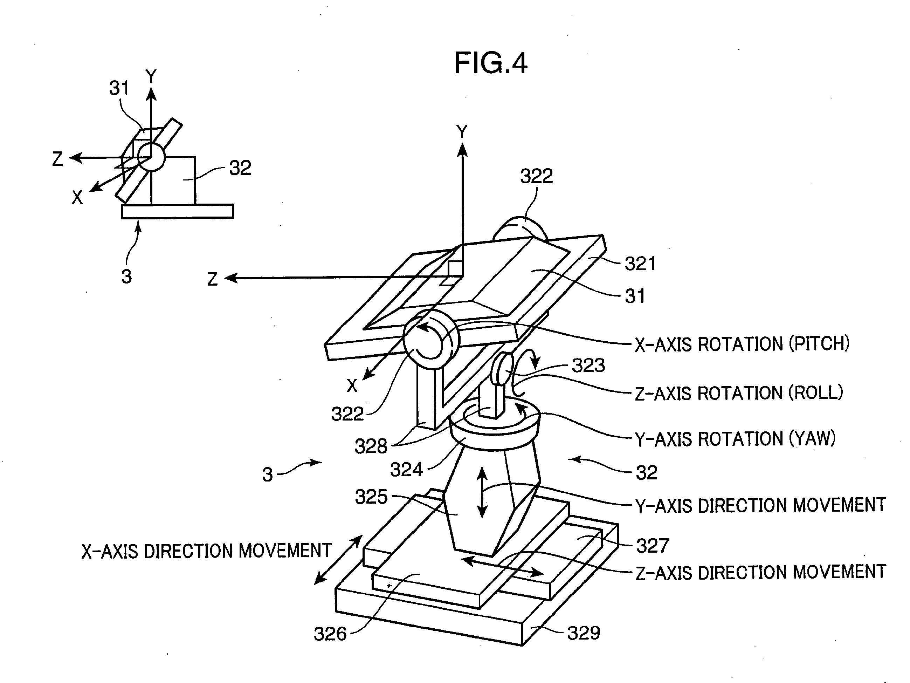

The position/angle adjusting mechanism 32 is a mechanism for adjusting the position or the angle of the calibration chart 31 with respect to the measuring device 2 while supporting the calibration chart 31. Before the position/angle adjusting mechanism 32 is described in detail, a coordinate system of the calibration device 3 is described. The coordinate system of the calibration device 3 (hereinafter, called as "calibration device coordinate system") is a coordinate system substantially equivalent to a fixed world coordinate system, and accordingly, is a world coordinate system. In this embodiment, as shown by the calibration device 3 schematically shown in an upper left portion of FIG. 4, the calibration device coordinate system as the fixed world coordinate system is defined by a Z-axis extending horizontally on the top surface 314, a Y-axis extending vertically upwardly, and an X-axis extending perpendicular to a Y-Z plane defined by the Y-axis and the Z-axis, and forwardly on the plane of FIG. 4.

The position/angle adjusting mechanism 32 is constructed in such a manner that the calibration chart 31 is movable i.e. the position and the angle of the calibration chart 31 are adjustable in six degrees of freedom. Specifically, the position/angle adjusting mechanism 32 provides a parallel movement in the X-axis direction; a parallel movement in the Y-axis direction; and a parallel movement in the Z-axis direction; a pivotal movement about the X-axis called X-axis rotation corresponding to a pitch movement; a pivotal movement about the Y-axis called Y-axis rotation corresponding to a yaw movement; and a pivotal movement about the Z-axis called Z-axis rotation corresponding to a rolling movement. More specifically, the position/angle adjusting mechanism 32 includes a substantially planar-shaped mount block 321 for fixedly mounting the calibration chart 31; a pair of X-axis rotators 322 (hereinafter, called as "X-axis rotator pair") for pivotally rotating the mount block 321 about the X-axis; a Z-axis rotator 323 for pivotally rotating the mount block 321 about the Z-axis; a Y-axis rotator 324 for pivotally rotating the mount block 321 about the Y-axis; a Y-axis mover 325 for moving the mount block 321 in parallel to the Y-axis direction; an X-axis mover 326 for moving the mount block 321 in parallel to the X-axis direction; a Z-axis mover 327 for moving the mount block 321 in parallel to the Z-axis direction; a support frame 328 for supporting the mount block 321 for the X-axis rotation, the Y-axis rotation, the Z-axis rotation, and the parallel movement in the Y-axis direction; and a base block 329. The X-axis mover 326 and the Z-axis mover 327 each has a slide rail mechanism for slidably moving the X-axis mover 326 and the Z-axis mover 327 with respect to the base block 329. The Y-axis mover 325 has e.g. a jack-up mechanism for upwardly and downwardly moving the Y-axis mover 325 with respect to the base block 329. The position/angle adjusting mechanism 32 is designed in such a manner that all the axes of rotation of the X-axis rotation, the Y-axis rotation, and the Z-axis rotation pass the origin of the calibration device coordinate system i.e. the center of the calibration chart 31 or the point "I".

A driving section i. e. a driving source or a driving mechanism such as a motor e.g. a servo motor is provided in each of the components 322 through 327. The pivotal movement about the corresponding coordinate axis, or the parallel movement in the corresponding coordinate axis direction is performed by the corresponding driving section. As far as the pivotal movement or the parallel movement is realized, any configuration and any operation method is applicable to the driving section. With this arrangement, the components 322 through 327 are automatically driven by an adjusting parameter sent from the information processor 4, in other words, by a rotation amount or a parallel movement amount corresponding to the adjusting parameter. By the driving control, positioning between the calibration chart 31 and the measuring device 2 opposing to each other is realized, in other words, the origin of the calibration device coordinate system and the origin of the measuring device coordinate system are aligned with each other. The term "positioning" is defined herein. A displacement of two components opposing to each other includes a positional displacement or a distance displacement (hereinafter, called as "positional displacement"), and an angular displacement or a directional displacement (hereinafter, called as "angular displacement"). The term "positioning" means adjustment to eliminate a positional displacement and an angular displacement.

In an actual positioning operation, first, an angular displacement is eliminated by pivotal movement. The position/angle adjusting mechanism 32 performs the pivotal movement in the order of Y-axis rotation, Z-axis rotation, and X-axis rotation. Specifically, after Y-axis rotation by $\theta$-degrees, which is defined by a rotation matrix $Y_\theta$, is performed, Z-axis rotation by $\phi$-degrees, which is defined by a rotation matrix $Z_\phi$, is performed, and then, X-axis rotation by $\psi$-degrees, which is defined by a rotation matrix $X_\psi$, is performed. Thus, after the angular displacement is eliminated by pivotal movement, a positional displacement is eliminated by parallel movement. The moving amount in the parallel movement is represented by (lx, ly, lz), and is defined by a matrix "L".

The rotation matrices $Y_\theta$, $Z_\phi$, $X_\psi$, and the matrix "L" are expressed by the following determinants (1) through (4):

$$Y_\theta = \begin{pmatrix} \cos\theta & 0 & \sin\theta & 0 \\ 0 & 1 & 0 & 0 \\ -\sin\theta & 0 & \cos\theta & 0 \\ 0 & 0 & 0 & 1 \end{pmatrix} \qquad \cdots (1)$$

$$Z_\phi = \begin{pmatrix} \cos\phi & -\sin\phi & 0 & 0 \\ \sin\phi & \cos\phi & 0 & 0 \\ 0 & 0 & 1 & 0 \\ 0 & 0 & 0 & 1 \end{pmatrix} \qquad \cdots (2)$$

$$X_\varphi = \begin{pmatrix} 1 & 0 & 0 & 0 \\ 0 & \cos\varphi & -\sin\varphi & 0 \\ 0 & \sin\varphi & \cos\varphi & 0 \\ 0 & 0 & 0 & 1 \end{pmatrix} \qquad \cdots (3)$$

$$L = \begin{pmatrix} 1 & 0 & 0 & 0 \\ 0 & 1 & 0 & 0 \\ 0 & 0 & 1 & 0 \\ lx & ly & lz & 1 \end{pmatrix} \qquad \cdots (4)$$

Assuming that a series of coordinate transformation matrices comprised of the rotation matrices $Y_\theta$, $Z_\phi$, $X_\psi$, and the matrix "L" is represented by "M", the series of coordinate transformation matrices can be expressed by the following mathematical expression (5):

$$M = Y_\theta \cdot Z_\phi \cdot X_\psi \cdot L \qquad \cdots (5)$$

Assuming that a coordinate before coordinate transformation by the coordinate transformation matrix M is (xa, ya, za), a coordinate after coordinate transformation by the coordinate transformation matrix M is (xb, yb, zb), Pa=(xa, ya, za, 1), and Pb=(xb, yb, zb, 1), then, the following mathematical expression (6) is obtained:

$$Pb = M \cdot Pa \qquad \cdots (6)$$

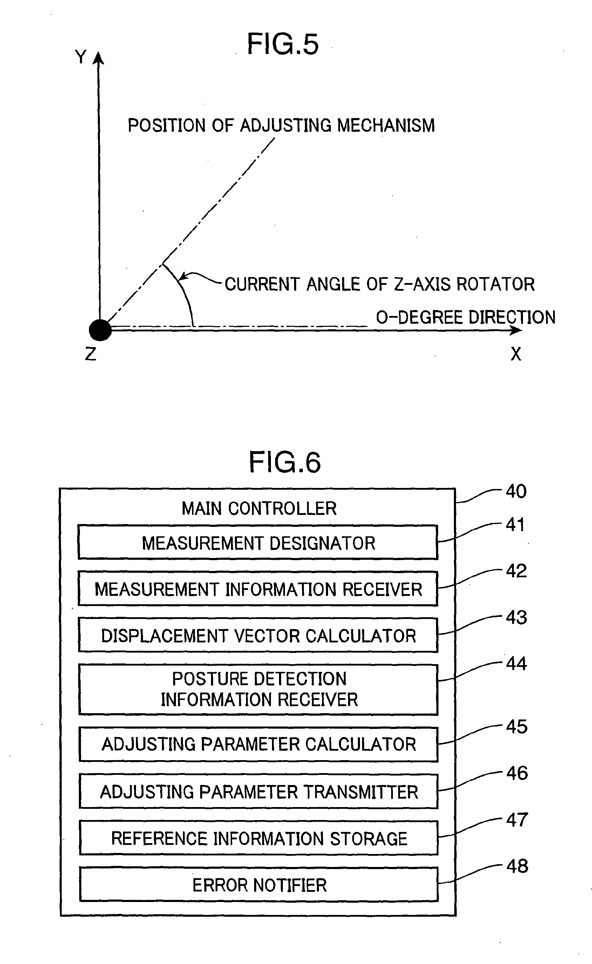

The position/angle adjusting mechanism 32 also functions as a posture detecting section for detecting the posture of the calibration chart 31. Specifically, if the position/angle adjusting mechanism 32 is constructed in such a manner that a current angle absolute value of the position/angle adjusting mechanism 32 is also detected by the pivotal movements of the X-axis rotator pair 322, the Z-axis rotator 323, and the Y-axis rotator 324, the posture of the calibration chart 31 in the world coordinate system can also be detected. For instance, in the Z-axis rotation, let it be assumed that, as shown in FIG. 5, e.g. the X-axis direction on the X-Y plane is aligned with 0-(zero) degree direction, which is an absolute rotation angle reference in the Z-axis rotation. Then, the current posture of the calibration chart 31 showing how much the calibration chart 31 is angularly inclined with respect to the X-axis direction can be detected by detecting a rotation amount i.e. the angle absolute value indicating how much the calibration chart 31 is angularly displaced from the reference angular position.

The position/angle adjusting mechanism 32 may be constructed in such a manner that each of the X-axis rotator pair 322, the Y-axis rotator 324, and the Z-axis rotator 323 has a detecting section for detecting the corresponding rotation amount i. e. a posture detecting sensor; and the posture detecting sensors are operative to automatically detect i.e. read information on a gauge value indicating how much absolute amount the X-axis rotator pair 322, the Y-axis rotator 324, and the Z-axis rotator 323 are angularly displaced from the reference angular position (=0 degree) in accordance with driving of the X-axis rotator 322, the Y-axis rotator 324, and the Z-axis rotator 323, respectively. With this arrangement, angle absolute values ($\psi 0$, $\theta 0$, $\phi 0$) in the X-axis rotation, the Y-axis rotation, and the Z-axis rotation are obtained. Then, information (hereinafter, called as "posture detection information") detected by the posture detecting sensors is outputted to the information processor 4.

Each of the X-axis mover 326, the Y-axis mover 325, and the Z-axis mover 327 in the position/angle adjusting mechanism 32 may be provided with a sensor for detecting a parallel movement amount in the corresponding parallel movement, in addition to the posture detecting sensors provided in the X-axis rotator pair 322, the Y-axis rotator 324, and the Z-axis rotator 323. The driving sections and the detecting sections of the components 322 through 327 in the calibration device 3 are connected to the information processor 4 by a communication cable 33 so that data is transmittable and receivable to and from the information processor 4. A power source of the driving sections and the detecting sections may be provided in the calibration device 3, or provided in the information processor 4, or provided externally.

The information processor 4 causes the measuring device 2 to perform three-dimensional measurement of the calibration chart 31, and controls the calibration device 3 based on the measurement data obtained by the measurement by the measuring device 2 for positioning between the calibration chart 31 and the measuring device 2. In other words, the information processor 4 controls a driving operation or a posture detecting operation of the calibration device 3 to adjust the position or the angle i.e. the posture of the calibration chart 31. In this embodiment, the information processor 4 includes e.g. a PC (Personal Computer).

The information processor 4 includes an ROM (Read Only Memory) for storing a control program of the information processor 4, an RAM (Random Access Memory) for temporarily storing data, and a main controller 40 provided with a microcomputer for reading the control program or the like from the ROM for execution. The main controller 40 controls the driving operation or the posture detecting operation of the calibration device 3. FIG. 6 is a functional block diagram showing an example of the main controller 40. As shown in FIG. 6, the main controller 40 functionally has a measurement designator 41, a measurement information receiver 42, a displacement vector calculator 43, a posture detection information receiver 44, an adjusting parameter calculator 45, an adjusting parameter transmitter 46, a reference information storage 47, and an error notifier 48.

The measurement designator 41 causes the measuring device 2 to start three dimensional measurement of the calibration chart 31, and outputs a signal i.e. a communication command of requesting the measuring device 2 to send measurement information obtained by the three-dimensional measurement, after the measurement is completed. The measurement information receiver 42 receives three-dimensional data i. e. the measurement information sent from the measuring device 2.

The displacement vector calculator 43 calculates a displacement vector relating to a position displacement amount and an angle displacement amount of the calibration chart 31 in the measuring device coordinate system, based on the three-dimensional measurement data received by the measurement information receiver 42. The displacement vector corresponds to a "vector amount" in the measuring device coordinate system, which is defined by the position displacement amount and the angle displacement amount, in a stage before a position displacement amount and an angle displacement amount are calculated by the adjusting parameter calculator 45. The displacement vector calculated in this stage is transformed into a corresponding vector in a world coordinate system by the adjusting parameter calculator 45, and then, various adjusting parameters in the X-axis rotation, the Y-axis rotation, the Z-axis rotation, and the parallel movements in the X-axis direction, the Y-axis direction, and the Z-axis direction in the position/angle adjusting mechanism 32 are obtained.

<Calculation of Position Displacement Vector>

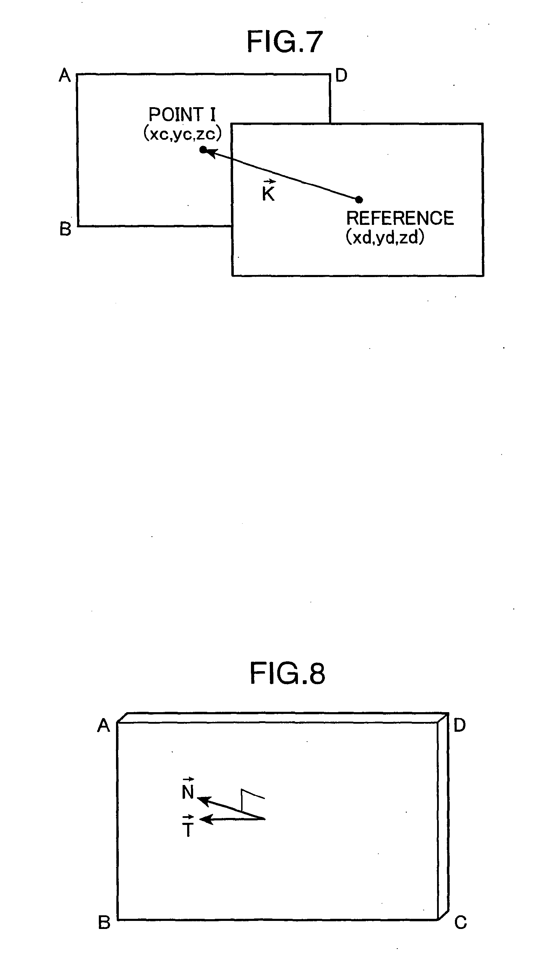

The displacement vector calculator 43 calculates a coordinate position (hereinafter, called as "I coordinate", see FIG. 3) at the point "I" in the measuring device coordinate system based on three-dimensional measurement data, and compares the I coordinate with a pre-stored reference coordinate to define a displacement amount of the I coordinate with respect to the reference coordinate as a direction vector. The displacement of the I coordinate with respect to the reference coordinate may also be called as "XYZ position displacement" by observing the displacement from the entirety of the XYZ-axes in the measuring device coordinate system. As shown in FIG. 7, assuming that the I coordinate is (xc, yc, zc), and the reference coordinate where the I coordinate is supposed to be, in other words, an ideal targeted coordinate in positioning showing that the positioning is properly performed, is (xd, yd, zd), then, the XYZ position displacement vector K is expressed by the following mathematical expression (7):

$$(kx, ky, kz) = (xc\text{-}xd, yc\text{-}yd, zc\text{-}zd) \qquad \dots (7)$$

The symbol "K" in the specification corresponds to $\vec{k}$ in FIG. 7. In the case where the calibration chart 31 is disposed in the center of the angle of view of the measuring device 2 i.e. the center of a captured image, since the XYZ position displacement vector K is aligned with the Z-axis, xd=yd=0. In other words, the reference coordinate is (0, 0, zd).

<Calculation of Angle Displacement Vector>

An approach of calculating an angle displacement vector is based on: an angle displacement vector (hereinafter, called as "XY-axis angle displacement vector") with respect to the X-axis and the Y-axis , in other words, an X-Y plane defined by the X-axis and the Y-axis, which corresponds to shift photographing called "aori" in Japanese; and an angle displacement vector (hereinafter, called as "Z-axis angle displacement vector") with respect to the Z-axis, in other words, the Z-axis rotation.

[Calculation of XY-axis Angle Displacement Vector]

The displacement vector calculator 43 calculates a normal vector (hereinafter, called as "measurement normal vector N") to the top surface 314 of the calibration chart 31 in the measuring device coordinate system based on three-dimensional measurement data, and acquires a normal vector (hereinafter, called as "reference normal vector T") to a pre-stored ideal targeted plane in positioning i.e. a reference plane or an ideal plane, which shows that the positioning is properly performed. As shown in FIG. 8, the displacement vector calculator 43 defines the measurement normal vector N=(nx, ny, nz) and the reference normal vector T=(tx, ty, tz) as an XY-axis angle displacement vector. The symbols "N" and "T" in the specification correspond to $\vec{N}$ and $\vec{T}$ in FIG. 8, respectively.
An exemplary method for calculating the measurement normal vector includes: calculating coordinates at the points "A", "B" , "C", and "D" of the calibration chart 31 in the measuring device coordinate system based on three-dimensional measurement data; plane-approximating the rectangle ABCD based on the calculated coordinate information on the four points "A", "B", "C", and "D" to obtain a plane ABCD; and calculating the measurement normal vector N based on the plane ABCD. In the case where a calibration chart including spherical bodies is used as described in the below-mentioned modification, a planar portion of the calibration chart is plane-approximated. An exemplary method for calculating the coordinates at the four points "A", "B", "C", and "D" based on the three-dimensional measurement data is as follows. For instance, in the case of the point "A, as shown in FIG. 3, mathematical expressions representing the planes corresponding to the top surface 314, the side surface 315, and the side surface 316 are obtained, and an intersection i.e. a three-dimensional coordinate point of the three planes is calculated. In the case where the reference plane opposes to the measuring device in parallel, the reference normal vector T is (0, 0, 1), which coincides with the unit direction vector in the Z-axis direction.

[Calculation of Z-axis Angle Displacement Vector]

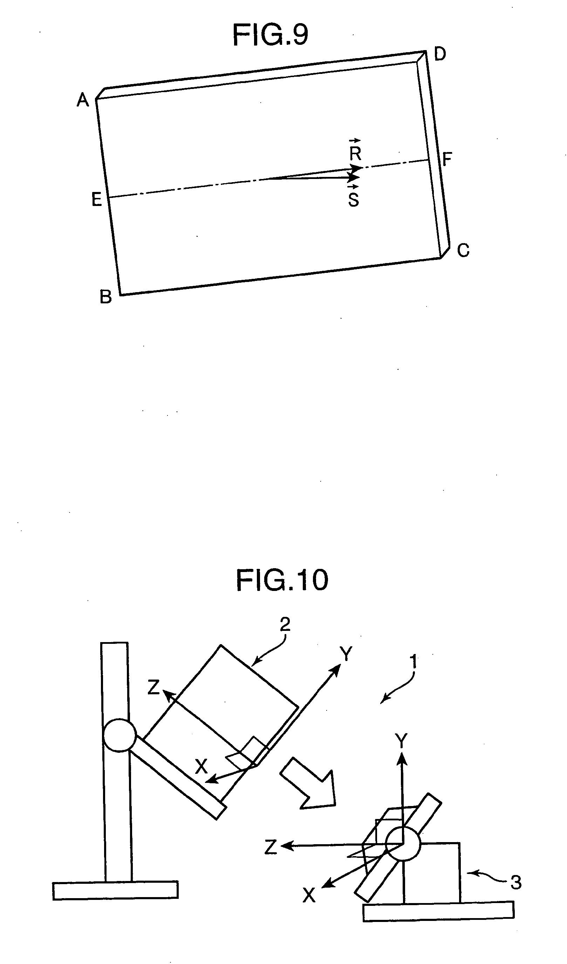

The displacement vector calculator 43 calculates a horizontal vector (hereinafter called as "measurement direction vector R") to the top surface 314 of the calibration chart 31 in the measuring device coordinate system based on three-dimensional measurement data, and acquires a vector (hereinafter, called as "reference direction vector S") in a pre-stored ideal targeted direction in positioning i. e. a reference direction or an ideal direction, which shows that the positioning is properly performed. As shown in FIG. 9, the displacement vector calculator 43 defines the measurement direction vector R=(rx, ry, rz) and the reference direction vector S=(sx, sy, sz) as a Z-axis angle displacement vector. The symbols "R" and "S" in the specification correspond to $\vec{R}$ and $\vec{S}$ in FIG. 9, respectively.
An exemplary method for calculating the measurement direction vector includes: calculating the coordinates at the four points "A" , "B" , "C" , and "D" of the calibration chart 31 in the measuring device coordinate system based on three-dimensional measurement data; calculating the coordinates at the midpoints "E" and "F" as shown in FIG. 3 based on the calculated coordinate information on the four points "A", "B", "C", and "D"; and calculating the measurement direction vector R based on the calculated coordinate information on the two midpoints "E" and "F". In the case where the calibration chart including spherical bodies is used as described in the below-mentioned modification, the measurement direction vector R is obtained based on midpoints on the planar portion of the calibration chart corresponding to the midpoints "E" and "F". Alternatively, the measurement direction vector may be obtained based on e.g. the midpoints "G" and "H" or other points, in place of the midpoints "E" and "F". Any approach including an approach of obtaining a plane ABCD based on the four points "A", "B", "C", and "D", and obtaining a measurement direction vector based on any two points within the plane ABCD is applicable. In the modification, if the reference plane opposes to the measuring device in parallel, the reference direction vector S is (1, 0, 0), which coincides with the unit direction vector in the X-axis direction.

The posture detection information receiver 44 receives posture detection information on the calibration chart 31, which is detected and outputted from the posture detecting sensors in the X-axis rotator pair 322, the Y-axis rotator 324, and the Z-axis rotator 323 of the position/angle adjusting mechanism 32, e.g. the aforementioned angle absolute values $(\psi 0, \theta 0, \phi 0)$ in the X-axis rotation, the Y-axis rotation, and the Z-axis rotation in the calibration device coordinate system.

The adjusting parameter calculator 45 calculates an adjusting parameter to be used in adjustment driving relating to the positioning by the position/angle adjusting mechanism 32. The adjusting parameter calculator 45 transforms the displacement vector calculated by the displacement vector calculator 43 from the measuring device coordinate system to the calibration device coordinate system by using the posture detection information received by the posture detection information receiver 44, and acquires an adjusting parameter based on the transformation information, which is described in the following in detail.

First, a method for transforming the measuring device coordinate system i.e. a local coordinate system into the calibration device coordinate system i.e. a world coordinate system is described as shown in FIG. 10. In this section, let it be assumed that a world coordinate system is transformed into a local coordinate system i.e. the measuring device coordinate system, which is opposite to what is shown in FIG. 10, by pivotally rotating the position/angle adjusting mechanism 32 by the aforementioned angle absolute values, in other words, about the Y-axis by $\theta 0$-degree, about the Z-axis by $\phi 0$-degree, and about the X-axis by $\psi 0$-degree, followed by parallel movement of the origin. The parallel movement is expressed by a transformation matrix $L_0$. This transformation is expressed by the following mathematical expressions (8) and (9), assuming that a coordinate in the world coordinate system is P' (x' , y' , z'), and a coordinate in the measuring device coordinate system is P(x, y, z):

$$P \ = \ M_0 \cdot P' \qquad\qquad \text{...} \ (8)$$

$$M_0 \ = \ Y_{\theta 0} \cdot Z_{\phi 0} \cdot X_{\psi 0} \cdot L_0 \qquad\qquad \text{...} \ (9)$$

Then, the following mathematical expressions (10) and (11) as mathematical expressions for transforming the measuring device coordinate system into a world coordinate system are obtained based on the mathematical expressions (8) and (9):

$$P' \ = \ M_0^{-1} \cdot P \qquad\qquad \text{...} \ (10)$$

$$M_0^{-1} = \ L_0^{-1} \cdot X_{\psi 0}^{-1} \cdot Z_{\phi 0}^{-1} \cdot Y_{\theta 0}^{-1} \qquad\qquad \text{...} \ (11)$$

Then, for instance, the points "A" through "H" (see FIG. 3) on the measuring device coordinate system are transformed into corresponding points "A' " through "H' " in the world coordinate system by applying inverse matrices as expressed by the mathematical expressions (10) and (11).

In the case where the aforementioned transformation is applied to the direction vector "p" in the measuring device coordinate system, since the transformation matrix $L_0$ corresponding to parallel movement is not performed, the mathematical expressions (10) and (11) are expressed by the following mathematical expressions (12) and (13).

$$\vec{p}\,' = Q_0^{-1} \cdot \vec{p} \qquad\qquad \text{... (12)}$$

$$Q_0^{-1} = X_{\psi 0}^{-1} \cdot Z_{\phi 0}^{-1} \cdot Y_{\theta 0}^{-1} \qquad\qquad \text{... (13)}$$

The adjusting parameter calculator 45 solves the mathematical expressions (12) and (13) to obtain vectors in the measuring device coordinate system by using the information on the angle absolute values ($\psi 0$, $\theta 0$, $\phi 0$). Then, the adjusting parameter calculator 45 transforms the position displacement vector K, the measurement normal vector N, the reference normal vector T, the measurement direction vector R, and the reference direction vector S in the measuring device coordinate system, which have been calculated by the displacement vector calculator 43, into corresponding vectors in the world coordinate system, by using the transformation expressions represented by the mathematical expressions (12) and (13). The vectors in the world coordinate system are: K' =(kx', ky', kz'), N'=(nx', ny', nz'), T'=(tx', ty', tz'), R'=(rx', ry', rz'), and S'=(sx', sy', sz').

Then, the adjusting parameter calculator 45 calculates an angle displacement amount (hereinafter, called as "X-axis angle displacement amount") of the X-axis rotation in the world coordinate system, an angle displacement amount (hereinafter, called as "Y-axis angle displacement amount") of the Y-axis rotation in the world coordinate system, and an angle displacement amount (hereinafter, called as "Z-axis angle displacement amount") of the Z-axis rotation in the world coordinate system, by using the information on the vectors in the world coordinate system obtained by the coordinate transformation. In this stage, information on the vector K' relating to parallel movement is not used.

<Calculation of X-axis Angle Displacement Amount]

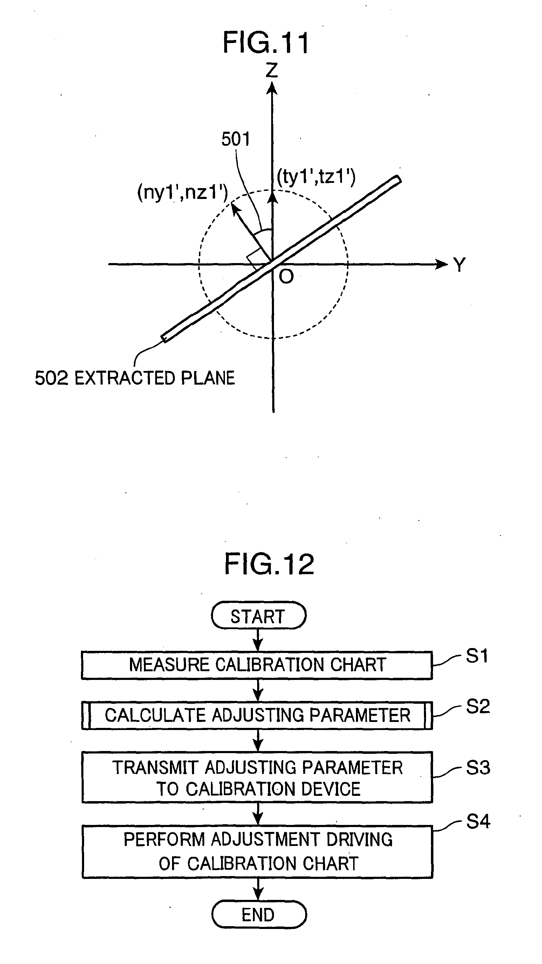

The X-axis angle displacement amount is obtained based on a measurement normal vector N' and a reference normal vector T' projected on the YZ-plane. Specifically, as shown in FIG. 11, the X-axis angle displacement amount corresponds to an angle 501 defined by a normalization measurement normal vector (ny1', nz1') obtained by normalizing a YZ-component of the measurement normal vector N', and a normalization reference normal vector (ty1', tz1') obtained by normalizing a YZ-component of the reference normal vector T'. In other words, assuming that the angle 501 is an X-axis angle displacement amount $\psi$, the value of $\psi$ which satisfies the following mathematical expression (14) is defined as the X-axis angle displacement amount.

$$\cos \psi = ny1' \cdot ty1' + nz1' \cdot tz1' \qquad\qquad \text{... (14)}$$

FIG. 11 is a YZ-plane view, viewed from the positive X-axis direction, showing a case that the Z-axis direction is aligned with the direction of the normalization reference normal vector i.e. an ideal direction. The reference numeral 502 indicates a plane (hereinafter, called as "extracted plane") including the normalization measurement normal vector (ny1', nz1') and perpendicular to the YZ-plane. The mathematical expression (14) shows an inner product of the vector (ny1', nz1') and the vector (ty1', tz1').

<Calculation of Y-axis Angle Displacement Amount>

Similarly to the X-axis angle displacement amount, the Y-axis angle displacement amount is expressed by $\theta$ which satisfies the following mathematical expression (15).

$$\cos \theta = nz2' \cdot tz2' + nx2' \cdot tx2' \qquad\qquad \text{... (15)}$$

Specifically, the measurement normal vector N' and the reference normal vector T' are projected on the ZX-plane, and the angle $\theta$ is defined by a normalization measurement normal vector (nx2', nz2') obtained by normalizing a ZX-component of the measurement normal vector N', and a normalization reference normal vector (tx2', tz2') obtained by normalizing a ZX-component of the reference normal vector T'.

<Calculation of Z-axis Angle Displacement Amount>

Similarly to the X-axis angle displacement amount and the Y-axis angle displacement amount, the Z-axis angle displacement amount is expressed by $\phi$ which satisfies the following mathematical expression (16).

$$\cos\phi = dx3' \cdot sx3' + dy3' \cdot sy3' \qquad \dots (16)$$

Specifically, a measurement direction vector R' and a reference direction vector S' are projected on the XY-plane, and the angle $\phi$ is defined by a normalization measurement direction vector (rx3', ry3') obtained by normalizing an XY-component of the measurement direction vector R', and a normalization reference direction vector (sx3', sy3') obtained by normalizing an XY-component of the reference direction vector S'.

As described above, the adjusting parameter calculator 45 calculates the X-axis angle displacement amount $\psi$, the Y-axis angle displacement amount $\theta$, and the Z-axis angle displacement amount $\phi$. The position/angle adjusting mechanism 32 in the calibration device 3 drives the X-axis rotator pair 322, the Y-axis rotator 324, and the Z-axis rotator 323 to eliminate angular displacements based on the information on the angle displacement amounts $\psi$, $\theta$, $\phi$, and drives the X-axis mover 326, the Y-axis mover 325, and the Z-axis mover 327 to eliminate positional displacements i.e. XYZ position displacement based on the information on the XYZ position displacement vector K' obtained by the adjusting parameter calculator 45 to perform positioning of the calibration chart 31 relative to the measuring device 2. The position/angle displacement amount is a displacement amount obtained by transforming the position/angle displacement amount in the measuring device coordinate system into the corresponding displacement amount in the world coordinate system. Accordingly, in actual driving by the position/angle adjusting mechanism 32, the X-axis rotator pair 322, the Y-axis rotator 324, and the Z-axis rotator 323 are driven in the directions opposite to the driving directions based on the angle displacement amounts $\psi$, $\theta$, $\phi$.

Assuming that the coordinate before the position/angle displacement is eliminated is P' (x', y', z'), and the coordinate after the position/angle displacement is eliminated is P" (x", y", z"), the position/angle adjusting mechanism 32 is driven by using the information on the transformation matrix M expressed by the following mathematical expression (18) in such a manner that the Y-axis rotator 324 is rotated about the Y-axis by -$\theta$ degrees, the Z-axis rotator 323 is rotated about the Z-axis by -$\phi$ degrees, and the X-axis rotator pair 322 is rotated about the X-axis by -$\psi$ degrees, and that the X-axis mover 326, the Y-axis mover 325, and the Z-axis mover 327 make respective parallel movements by the amount -K' (the parallel movements are defined by the transformation matrix L), in other words, a transformation represented by the following mathematical expression (17) is performed. By this driving control, the positioning of the calibration chart 31 relative to the measuring device 2 can be performed. The adjusting parameter calculator 45 calculates the transformation matrix M as an adjusting parameter.

$$P'' = M \cdot P' \qquad \dots (17)$$

$$M = Y_{-\theta} \cdot Z_{-\phi} \cdot X_{-\psi} \cdot L \qquad \dots (18)$$

The adjusting parameter transmitter 46 transmits information on the adjusting parameter i.e. the transformation matrix M calculated by the adjusting parameter 45 to the individual driving sections in the position/angle adjusting mechanism 32.

Then, the position/angle adjusting mechanism 32 automatically drives the individual driving sections by the adjusting parameter transmitted from the adjusting parameter transmitter 46 i.e. designated by the information processor 4. Hereinafter, the driving relating to positioning based on the adjusting parameter by the position/angle adjusting mechanism 32 is called "adjustment driving" according to needs. The adjustment driving is performed as follows. For instance, in FIG. 10, if the measuring device 2 detects that the position of the calibration chart 31 is displaced in e.g. the positive Y-direction in the measuring device coordinate system, the position/angle adjusting mechanism 32 moves the calibration chart 31 in e.g. the positive Z-direction and the minus Y-direction in the calibration device coordinate system, in other words, in a direction of a composite vector obtained by synthesizing the plus Z direction vector and the minus Y direction vector to eliminate the displacement, by using the adjusting parameter obtained based on the measurement result.

The reference information storage 47 stores information (hereinafter, called as "reference information") relating to the position/angle of the calibration chart 31 as a reference i.e. an ideal or targeted position/angle in positioning of the calibration chart 31, as a known value. Specifically, the reference information is information on the reference coordinate in the positional displacement, and the reference normal vector T and the reference direction vector S in the angular displacement. The reference information storage 47 also stores information on actual dimensions/shape i.e. a true value or a design value of the calibration chart 31, e.g. the lengths of the respective sides of the top surface 314 and the side surfaces 315 through 318. The information on the actual dimensions/shape of the calibration chart 31 is used as comparison data to be used in performing calibration, after the positioning in the embodiment is completed. In other words, information on current dimensions/shape of the calibration chart 31 obtained by three-dimensional measurement after positioning of thee calibration chart 31 is completed is compared with the information on the actual dimensions/shape of the calibration chart 31. This embodiment describes the positioning before the calibration.

The error notifier 48 detects an operation error i.e. an abnormal operation in the components of the three-dimensional system 1 relating to positioning, specifically, in at least one of the functional parts e.g. the measuring device 2, the position/angle adjusting mechanism 32 in the calibration device 3, the displacement vector calculator 43, the adjusting parameter calculator 45, and the posture detection information receiver 44, in other words, judges whether an abnormal operation has occurred in the components of the three-dimensional measuring system 1. The error notifier 48 notifies error information, if the abnormal operation is detected.

If the measuring device 2 detects failure of acquisition of part or the entirety of the data concerning the calibration chart 31 e.g. calculation failure of the vectors due to e.g. measurement failure of the calibration chart 31 by the measuring device 2, the error notifier 48 causes a relevant component to output visual indication or audio sound to notify the user of the error information. More specifically, the error notifier 48 counts a predetermined time after a command to measure the calibration chart 31 is outputted from the measurement designator 41 to the measuring device 2, and judges that an error has occurred if measurement data is not transmitted from the measuring device 2 upon lapse of the predetermined time. Then, an error message or an alert sound indicating the error is outputted from a monitor e.g. a liquid crystal display screen or a speaker of the information processor 4 or the measuring device 2.

Error notification concerning the three-dimensional measurement by the measuring device 2, or calculation of the positional/angle displacement amounts based on the three-dimensional measurement data may be performed by the error notifier 48 in the similar manner as mentioned above, in the case where it is judged i.e. detected that a calculated value exceeds an actual operable range of the position/angle adjusting mechanism 32, and adjustment driving is disabled, despite proper measurement/calculation. A method for detecting an error in the functional parts, or a method for notifying error information may be other than the arrangement mentioned above.

In the three-dimensional measuring system 1 having the above arrangement, the calibration chart 31 may be measured by the measuring device 2 after a rough position/angle i.e. a rough posture of the calibration chart 31 is adjusted while the user views an image of the calibration chart 31 on the monitor. This is preferable because acquiring three-dimensional measurement data on the entire area of the calibration chart 31 is advantageous in precisely i.e. securely and speedily performing positioning based on three-dimensional measurement data.

FIG. 12 is a flowchart for describing an example of an entire operation on positioning to be executed by the three-dimensional measuring system 1. First, the calibration chart 31 is measured by the measuring device 2 in response to a measurement designation or a like command from the measurement designator 41 to acquire three-dimensional measurement data (Step S1). Then, the information processor 4 calculates an adjusting parameter, based on the three-dimensional data i.e. information on the shape of the calibration chart 31 acquired by the measuring device 2 (Step S2). Then, the adjusting parameter is transmitted to the calibration device 3 (Step S3). Then, the position/angle adjusting mechanism 32 in the calibration deice 3 performs adjustment driving of the calibration chart 31 based on the adjusting parameter (Step S4).

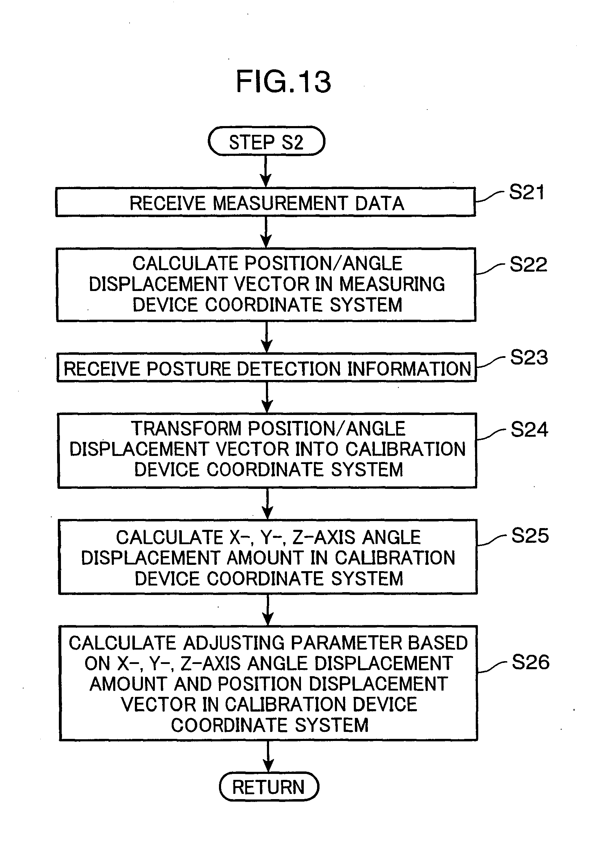

FIG. 13 is a flowchart for describing an example of a detailed operation of calculating the adjusting parameter in Step S2 in FIG. 12. When the control enters Step S2, first, the three-dimensional measurement data transmitted from the measuring device 2 is received by the measurement information receiver 42 in the information processor 4 (Step S21). Then, the displacement vector calculator 43 calculates i.e. sets a position displacement vector, and an angle displacement vector i.e. an XY-axis angle displacement vector and a Z-axis angle displacement vector in the measuring device coordinate system, based on the received three-dimensional measurement data, and the reference information stored in the reference information storage 47 (Step S22). Then, the posture detection information receiver 44 receives posture detection information on the calibration chart 31 detected by the posture detecting sensors in the position/angle adjusting mechanism 32 (Step S23). Then, the adjusting parameter calculator 45 transforms the position displacement vector and the angle displacement vector in the measuring device coordinate system into corresponding vectors in the calibration device coordinate system as a world coordinate system (Step S24). Then, an X-axis angle displacement amount $\psi$, a Y-axis displacement amount $\theta$, and a Z-axis displacement amount $\phi$ are calculated based on the angle displacement vectors in the calibration device coordinate system (Step S25). Then, a transformation matrix M as the adjusting parameter is calculated, based on the information on the X-axis angle displacement amount $\psi$, the Y-axis displacement amount $\theta$, and the Z-axis displacement amount $\phi$ in the calibration device coordinate system, and the position displacement vector in the calibration device coordinate system (Step S26).

As mentioned above, in the three-dimensional measuring system 1 of the embodiment serving as a positioning system, the measuring device 2 as a measuring section three-dimensionally measures a stereoscopic object as a measurement object i.e. the calibration chart 31 or a calibration chart 700 in a non-contact state to acquire three-dimensional data on the measurement object. The reference information storage 47 as a storing section pre-stores reference information serving as a reference in positioning between the measuring section and the measurement object. In this embodiment, the reference information includes information on the reference coordinate, the reference normal vector T and the reference direction vector S. The displacement vector calculator 43 as a displacement amount calculating section calculates a position displacement amount and an angle displacement amount of the measurement object relative to the measuring section in a coordinate system of the measuring section, based on the three-dimensional data and the reference information. The adjusting parameter calculator 45 as a transforming section transforms the position displacement amount and the angle displacement amount into an adjusting parameter for use in performing an adjusting operation in the positioning. The position/angle adjusting mechanism 32 as an adjusting section adjusts a position and an angle of the measurement object based on the adjusting parameter.

In the above arrangement, positioning between the measuring section and the measurement object is performed by adjusting the position and the angle of the measurement object by the adjusting section, in other words, the positioning is performed by moving the measurement object without moving the measuring section. This enables to perform positioning without the need of a large space as an installation space or a moving space. Also, the relative position displacement amount and the relative angle displacement amount between the measuring section and the measurement object are automatically calculated based on the three-dimensional data and the reference information. This facilitates positioning without the need of a user's operation of designating a reference position. Since the position displacement amount and the angle displacement amount are transformed into the adjusting parameter to be used by the adjusting section, the adjusting operation for the positioning can be easily performed both in automatic driving and manual operation by using the adjusting parameter. Also, the positioning is performed in a state that the measuring section is retained in the same posture as in actual measurement, without moving the measuring section i.e. without changing the position or the orientation of the measuring section. This prevents occurrence of a posture difference of the measuring section, thereby enabling to perform positioning with high-precision. The three-dimensional data is acquired by three-dimensional measurement of the measurement object by the measuring section. In other words, use of the three-dimensional data on the measurement object in the adjusting operation to be executed by the adjusting section provides high-precision positioning, as compared with a case that positioning is performed based on two-dimensional data.

The X-axis rotator 322, the Y-axis rotator 324, and the Z-axis rotator 323 in the position/angle adjusting mechanism 32 as a posture detecting section detect a posture of the measurement object. The transforming section calculates a relational expression, serving as a coordinate transformation expression e.g. the coordinate transformation matrix M, which shows a relation between the coordinate system of the measuring section and a coordinate system of the adjusting section by using the posture detection information obtained by the posture detecting section. The position displacement amount and the angle displacement amount in the coordinate system of the measuring section is transformed into the adjusting parameter in the coordinate system of the adjusting section by performing a coordinate transformation based on the relational expression. Thus, the position displacement amount and the angle displacement amount obtained in the measuring section can be handled as the position displacement amount and the angle displacement amount in the adjusting section. This arrangement enables to realize the positioning by moving the measurement object without moving the measuring section, and to perform positioning with ease and high precision without the need of a large space as an installation space or a moving space.

The measurement object is a reference stereoscopic object e.g. the calibration chart 31 or the calibration chart 700, whose shape is known, wherein the measurement object is used in performing calibration of the measuring section. The adjusting section adjusts the position and the angle of the reference stereoscopic object to perform the positioning in a stage before the calibration is performed. This enables to use the positioning system as a calibration system for calibrating the measuring section by using the reference stereoscopic object. In other words, the three-dimensional measuring system 1 can be configured into a positioning system.

The adjusting section includes an automatic adjusting mechanism so that the adjusting section is automatically driven based on the adjusting parameter to perform the adjusting operation. This allows the adjusting section to automatically perform the adjusting operation by the automatic adjusting mechanism, which is further advantageous in positioning between the measuring section and the measurement object.

The adjusting parameter calculator 45, e.g. a monitor or a speaker, serving as an adjusting information notifying section notifies the user of information relating to the adjusting parameter. The adjusting section includes a manual adjusting mechanism e.g. the jig so that the adjusting section is driven to perform the adjusting operation by user's manipulation. This provides high latitude in positioning between the measuring section and the measurement object.

The reference stereoscopic object i.e. the calibration chart 31 has a pyramidal frustum shape. This enables to obtain the position displacement amount and the angle displacement amount easily and precisely for positioning by using the simple-shaped reference stereoscopic object having the pyramidal frustum shape, and to perform calibration after the positioning easily and precisely by using the reference stereoscopic object.

The error notifier 48 serving as an abnormality detecting section detects an abnormal operation of at least one of the measuring section, the displacement amount calculating section, the transforming section, the adjusting section, and the posture detecting section. Also, the error notifier 48 as an abnormality notifying section notifies the user of information indicating the abnormal operation, if the abnormality detecting section detects the abnormal operation. This allows the user to easily know that an abnormality has occurred in the positioning operation by the positioning system.

The positioning system is configured of: the measuring device 2 as the measuring section; a device to be measured e.g. the calibration device 3, which includes the measurement object e.g. the calibration chart 31 or the calibration chart 700, and the adjusting section e.g. the position/angle adjusting mechanism 32 operable to support the measurement object in such a manner that the position and the angle of the measurement object are changeable; and the information processor 4 internally provided with the storing section, the displacement amount calculating section, and the transforming section, and communicably connected to the measuring device and the device to be measured. This enables to simplify the configuration of the positioning system comprised of the measuring device 2, the calibration device 3, and the information processor 4.

The positioning method of the embodiment includes: a first step of three-dimensionally measuring a stereoscopic object as a measurement object in a non-contact state to acquire three-dimensional data on the measurement object; a second step of pre-storing reference information serving as a reference in positioning of the measurement object relative to a measuring section for measuring the measurement object; a third step of calculating a position displacement amount and an angle displacement amount of the measurement object relative to the measuring section in a coordinate system of the measuring section, based on the three-dimensional data and the reference information; a fourth step of transforming the position displacement amount and the angle displacement amount into an adjusting parameter for use in performing an adjusting operation in the positioning; and a fifth step of adjusting a position and an angle of the measurement object based on the adjusting parameter.

In the above arrangement, positioning between the measuring section and the measurement object is performed by adjusting the position and the angle of the measurement object, in other words, the positioning is performed by moving the measurement object without moving the measuring section. This enables to perform positioning without the need of a large space as an installation space or a moving space. Also, the relative position displacement amount and the relative angle displacement amount between the measuring section and the measurement object are automatically calculated based on the three-dimensional data and the reference information. This facilitates positioning without the need of a user's operation of designating a reference position. Since the position displacement amount and the angle displacement amount are transformed into the adjusting parameter to be used in the adjusting operation, the adjusting operation for the positioning can be performed easily both in automatic driving and manual operation by using the adjusting parameter. Also, the positioning is performed in a state that the measuring section is retained in the same posture as in actual measurement, without moving the measuring section i.e. without changing the position or the orientation of the measuring section. This prevents occurrence of a posture difference of the measuring section, thereby enabling to perform high-precision positioning. The three-dimensional data is acquired by three-dimensional measurement of the measurement object by the measuring section. In other words, use of the three-dimensional data on the measurement object in the adjusting operation of the position and the angle of the measurement object provides high-precision positioning, as compared with a case that positioning is performed based on two-dimensional data.

The positioning method includes a sixth step of detecting a posture of the measurement object, wherein, in the fourth step, a relational expression showing a relation between the coordinate system of the measuring section and a coordinate system of an adjusting section is calculated by using posture detection information obtained in the sixth step, and a position displacement amount and an angle displacement amount of the measurement object relative to the measuring section in the coordinate system of the measuring section is transformed into the adjusting parameter in the coordinate system of the adjusting section by performing a coordinate transformation based on the relational expression. Thus, the position displacement amount and the angle displacement amount obtained in the measuring section can be handled as the position displacement amount and the angle displacement amount in the adjusting section. This arrangement enables to realize the positioning by moving the measurement object without moving the measuring section, and to perform positioning with ease and high precision without the need of a large space as an installation space or a moving space.

The following modifications are applicable to the invention.

(A) The calibration chart 700 including multiple spherical bodies as shown in FIG. 14 may be used as the calibration chart, in place of the calibration chart 31 as shown in FIG. 3. The calibration chart 700 is constructed in such a manner that four spherical bodies 702 identical to each other are arranged on an upper surface of a rectangular flat plate member 701. Each of the spherical bodies 702 is fixedly supported on the flat plate member 701 with a lower part thereof being embedded in the flat plate member 701. A rectangle ABCD in top plan view, corresponding to the rectangle ABCD of the calibration chart 31, is defined by the center points of the spherical bodies 702.

Thus, the calibration chart 700 including the multiple spherical bodies arranged in the predetermined positional relation (in the modification, the spherical bodies have a positional relation on the upper surface of the flat plate member) serves as the reference stereoscopic object. Thereby, a position displacement amount and an angle displacement amount of the reference stereoscopic object can be calculated easily and precisely for positioning by using the simple-shaped reference stereoscopic object including the multiple spherical bodies arranged in the predetermined positional relation, and calibration after the positioning can be performed easily and precisely by using the reference stereoscopic object. As far as the multiple spherical bodies can be fixedly supported with the predetermined positional relation, the support member for supporting the spherical bodies may have any shape other than the flat plate shape. The calibration chart is not limited to the calibration chart 31 or the calibration chart 700, but may be any stereoscopic object whose shape is known.

(B) The three-dimensional measuring system 1 may repeat the positioning operation i.e. the operations from Step S1 to Step S4 in FIG. 12 until the position displacement amount and the angle displacement amount between the measuring device 2 and the calibration chart 31 are converged into a certain range. In the modification, the main controller 40 may include a convergence judger, and the measuring system 1 may cause the measuring device 2 to automatically measure the calibration chart 31 after a first-time positioning operation i.e. a first-time adjustment driving by the position/ angle adjusting mechanism 32 is completed. Then, the convergence judger may judge whether the position displacement amount and the angle displacement amount obtained by the measuring operation e.g. the position/angle displacement amount in Step S22 in FIG. 13 is smaller than a predetermined threshold value. If the judgment result is negative, the positioning operation in Step S22 and thereafter is executed.

(C) The method for detecting the posture i.e. the angle absolute value of the calibration chart 31 may be other than the above. For instance, a protractor or a like device may be attached to the jig i.e. a screw or a knob of the position/ angle adjusting mechanism 32 in such a manner that the user can visually read the scale of the protractor. In the embodiment, the position/angle adjusting mechanism 32 in the calibration device 3 detects the posture of the calibration chart 31. Alternatively, the posture of the calibration chart 31 may be detected by the measuring device 2. Specifically, the measuring device 2 may measure a rotating angle i.e. a tilt angle or an angle absolute value of the calibration chart 31. In the modification, an angle scale is provided on the stand 23 of the measuring device 2 in such a manner that the user can visually read the scale value. Further alternatively, a posture sensor such as an acceleration sensor may be attached to the measuring device 2 or the calibration chart 31 to detect a posture of the calibration chart 31.

(D) In the embodiment, the position/angle adjusting mechanism 32 is automatically driven to adjust the position/ angle of the calibration chart 31 based on a command from the information processor 4 i.e. a personal computer. Alternatively, adjusting information relating to the adjusting parameter may be displayed on the monitor of the information processor 4, for instance, information on an adjusting amount i.e. a driving amount corresponding to a scale amount of a rotating jig may be displayed on the monitor or a like device so that the user is allowed to manipulate the position/ angle adjusting mechanism 32 while referring to the displayed adjusting amount for adjustment driving. The jig corresponds to the manual adjusting mechanism with which the user manually performs the adjusting operation. In the modification, the adjusting parameter calculator 45 may be operative to control display of the adjusting amount information on the monitor or a like device to notify the user of the adjusting amount.

(E) In the embodiment, the information processor 4, independently provided of the measuring device 2, executes calculation of the adjusting parameter based on the measurement data outputted from the measuring device 2. Alternatively, the calculation may be performed by the measuring device 2, in other words, a computing section may be provided in the measuring device 2. In the modification, the information processor 4 is unnecessary, and the measuring device 2 and the position/angle adjusting mechanism 32 are directly connected to each other by a communication cable or a like device.

(F) The embodiment describes positioning between the measuring device 2 and the calibration chart 31. Alternatively, the invention may be applied to positioning between the measuring device 2 and a measurement object whose shape is known, other than the calibration chart. In other words, as far as positioning between two components opposing to each other is performed in measurement, the invention is not only applied to the system for performing calibration i.e. the three-dimensional measuring system but also may be applied to a precision checking system for checking whether a measurement object has a required shape precision.

The specification discloses the aforementioned embodiment and the modifications. The following is a summary of the primary features of the technology.

According to an aspect of the invention, three-dimensional measuring device comprises: a measuring section for three-dimensionally measuring a stereoscopic object as a measurement object in a non-contact state to acquire three-dimensional data on the measurement object; a storing section for pre-storing reference information serving as a reference in positioning between the measuring section and the measurement object; a displacement amount calculating section for calculating a position displacement amount and an angle displacement amount of the measurement object relative to the measuring section in a coordinate system of the measuring section, based on the three-dimensional data and the reference information; and an output section for outputting the position displacement and the angle displacement amount.

In the above arrangement, the measuring section three-dimensionally measures the stereoscopic object as the measurement object in the non-contact state to acquire the three-dimensional data on the measurement object. The storing section pre-stores the reference information serving as the reference in positioning between the measuring section and the measurement object. The displacement amount calculating section calculates the position displacement amount and the angle displacement amount of the measurement object relative to the measuring section in the coordinate system of the measuring section, based on the three-dimensional data and the reference information. The transforming section transforms the position displacement amount and the angle displacement amount into the adjusting parameter for use in performing the adjusting operation in the positioning. The adjusting section adjusts the position and the angle of the measurement object based on the adjusting parameter. The output section outputs the position displacement amount and the angle displacement amount. With this arrangement, the three-dimensional measuring device is advantageous in performing positioning with ease and high precision by using the position displacement amount and the angle displacement amount.

According to another aspect of the invention, a positioning system comprises: a measuring section for three-dimensionally measuring a stereoscopic object as a measurement object in a non-contact state to acquire three-dimensional data on the measurement object; a storing section for pre-storing reference information serving as a reference in positioning between the measuring section and the measurement object; a displacement amount calculating section for calculating a position displacement amount and an angle displacement amount of the measurement object relative to the measuring section in a coordinate system of the measuring section, based on the three-dimensional data and the reference information; a transforming section for transforming the position displacement amount and the angle displacement amount into an adjusting parameter for use in performing an adjusting operation in the positioning; and an adjusting section for adjusting a position and an angle of the measurement object based on the adjusting parameter.

In the above arrangement, the measuring section three-dimensionally measures the stereoscopic object as the measurement object in the non-contact state to acquire the three-dimensional data on the measurement object. The storing section pre-stores the reference information serving as the reference in positioning between the measuring section and the measurement object. The displacement amount calculating section calculates the position displacement amount and the angle displacement amount of the measurement object relative to the measuring section in the coordinate system of the measuring section, based on the three-dimensional data and the reference information. The transforming section transforms the position displacement amount and the angle displacement amount into the adjusting parameter for use in performing the adjusting operation in the positioning. The adjusting section adjusts the position and the angle of the measurement object based on the adjusting parameter.

In the positioning system having the above arrangement, positioning between the measuring section and the measurement object is performed by adjusting the position and the angle of the measurement object by the adjusting section, in other words, the positioning is performed by moving the measurement object without moving the measuring section. This enables to perform positioning without the need of a large space as an installation space or a moving space. Also, the relative position displacement amount and the relative angle displacement amount between the measuring section and the measurement object are automatically calculated based on the three-dimensional data and the reference information. This facilitates positioning without the need of a user's operation of designating a reference position. Since the position displacement amount and the angle displacement amount are transformed into the adjusting parameter to be used in the adjusting section, the adjusting operation for the positioning can be easily performed both in automatic driving and manual operation by using the adjusting parameter. Also, the positioning is performed in a state that the measuring section is retained in the same posture as in actual measurement, without moving the measuring section i.e. without changing the position or the orientation of the measuring section. This prevents occurrence of a posture difference of the measuring section, thereby enabling to perform positioning with high-precision. The three-dimensional data is acquired by three-dimensional measurement of the measurement object by the measuring section. In other words, use of the three-dimensional data on the measurement object in the adjusting operation to be executed by the adjusting section provides high-precision positioning, as compared with a case that positioning is performed based on two-dimensional data.

Preferably, the positioning system may further comprise: a posture detecting section for detecting a posture of the measurement object, wherein the transforming section calculates a relational expression showing a relation between the coordinate system of the measuring section and a coordinate system of the adjusting section by using posture detection information obtained by the posture detecting section, and transforms the position displacement amount and the angle displacement amount in the coordinate system of the measuring section into the adjusting parameter in the coordinate system of the adjusting section by performing a coordinate transformation based on the relational expression.

In the above arrangement, the posture detecting section detects the posture of the measurement object. The transforming section calculates the relational expression showing the relation between the coordinate system of the measuring section and the coordinate system of the adjusting section by using the posture detection information obtained by the posture detecting section. The position displacement amount and the angle displacement amount in the coordinate system of the measuring section is transformed into the adjusting parameter in the coordinate system of the adjusting section by performing the coordinate transformation based on the relational expression.

In the positioning system having the above arrangement, the position displacement amount and the angle displacement amount in the coordinate system of the measuring section is transformed into the adjusting parameter in the coordinate system of the adjusting section by the coordinate transformation based on the relation between the measuring section coordinate system and the adjusting section coordinate system. Accordingly, the position adjusting amount and the angle displacement amount obtained in the measuring section can be handled as the position displacement amount and the angle displacement amount in the adjusting section. This arrangement enables to realize the positioning by moving the measurement object without moving the measuring section, and to perform positioning with ease and high precision without the need of a large space.

Preferably, the measurement object may be a reference stereoscopic object whose shape is known, wherein the measurement object is used in performing calibration of the measuring section, and the adjusting section may adjust the position and the angle of the reference stereoscopic object to perform the positioning in a stage before the calibration is performed.

In the above arrangement, the measurement object is the reference stereoscopic object whose shape is known, wherein the measurement object is used in performing the calibration of the measuring section. The adjusting section adjusts the position and the angle of the reference stereoscopic object to perform the positioning in the stage before the calibration is performed.

In the positioning system having the above arrangement, the positioning system can be configured into a calibration system for calibrating the measuring section with use of the reference stereoscopic object.

Preferably, the adjusting section may include an automatic adjusting mechanism so that the adjusting section is automatically driven based on the adjusting parameter to perform the adjusting operation.

In the above arrangement, with use of the automatic adjusting mechanism of the adjusting section, the adjusting section is automatically driven based on the adjusting parameter to perform the adjusting operation.

In the positioning system having the above arrangement, the adjusting section is driven to automatically perform the adjusting operation by the automatic adjusting mechanism, which is further advantageous in positioning between the measuring section and the measurement object.

Preferably, the positioning system may further comprise: an adjusting information notifying section for notifying a user of information relating to the adjusting parameter, wherein the adjusting section includes a manual adjusting mechanism so that the adjusting section is driven to perform the adjusting operation by user's manipulation.

In the above arrangement, the adjusting information notifying section notifies the user of the information relating to the adjusting parameter. The adjusting section includes the manual adjusting mechanism so that the adjusting section is driven to perform the adjusting operation by user's manipulation.

In the positioning system having the above arrangement, the adjusting operation by the adjusting section can be performed by user's manipulation with use of the manual adjusting mechanism. This provides high latitude in positioning between the measuring section and the measurement object.

Preferably, the measurement object may have a pyramidal frustum shape.

In the above arrangement, the reference stereoscopic object as the measurement object has the pyramidal frustum shape.

In the positioning system having the above arrangement, the position displacement amount and the angle displacement amount can be obtained easily and precisely for positioning by using the simple-shaped reference stereoscopic object having the pyramidal frustum shape, and calibration after the positioning can be performed easily and precisely by using the reference stereoscopic object.

Preferably, the measurement object may include multiple spherical bodies arranged in a predetermined positional relation.

In the above arrangement, the reference stereoscopic object as the measurement object includes the multiple spherical bodies arranged in the predetermined positional relation.

In the positioning system having the above arrangement, the position displacement amount and the angle displacement amount can be obtained easily and precisely for positioning by using the simple-shaped reference stereoscopic object including the multiple spherical bodies arranged in the predetermined positional relation, and calibration after the positioning can be performed easily and precisely by using the reference stereoscopic object.

Preferably the positioning system may further comprise: an abnormality detecting section for detecting an abnormal operation of at least one of the measuring section, the displacement amount calculating section, the transforming section, the adjusting section, and the posture detecting section, and an abnormality notifying section for notifying a user of information indicating the abnormal operation, if the abnormality detecting section detects the abnormal operation.

In the above arrangement, the abnormality detecting section detects the abnormal operation of at least one of the measuring section, the displacement amount calculating section, the transforming section, the adjusting section, and the posture detecting section. The abnormality notifying section notifies the user of the information indicating the abnormal operation, if the abnormality detecting section detects the abnormal operation.

In the positioning system having the above arrangement, since the information indicating the abnormal operation is notified by the abnormality notifying section, the user is allowed to easily recognize that an abnormality has occurred in the positioning operation by the positioning system.

Preferably, the positioning system may be configured of: a measuring device as the measuring section; a device to be measured including the measurement object, and the adjusting section operable to support the measurement object in such a manner that the position and the angle of the measurement object are changeable; and an information processor internally provided with the storing section, the displacement amount calculating section, and the transforming section, the information processor being communicably connected to the measuring device and the device to be measured.

In the above arrangement, the positioning system is configured of: the measuring device as the measuring section; the device to be measured including the measurement object, and the adjusting section operable to support the measurement object in such a manner that the position and the angle of the measurement object are changeable; and the information processor internally provided with the storing section, the displacement amount calculating section, and the transforming section, and communicably connected to the measuring device and the device to be measured.

In the positioning system having the above arrangement, the positioning system can be configured into a system with a simplified arrangement comprised of the measuring device, the device to be measured, and the information processor.

According to yet another aspect of the invention, a positioning method comprises: a first step of three-dimensionally measuring a stereoscopic object as a measurement object in a non-contact state to acquire three-dimensional data on the measurement object; a second step of pre-storing reference information serving as a reference in positioning of the measurement object relative to a measuring section for measuring the measurement object; a third step of calculating a position displacement amount and an angle displacement amount of the measurement object relative to the measuring section in a coordinate system of the measuring section, based on the three-dimensional data and the reference information; a fourth step of transforming the position displacement amount and the angle displacement amount into an adjusting parameter for use in performing an adjusting operation in the positioning; and a fifth step of adjusting a position and an angle of the measurement object based on the adjusting parameter.

In the above arrangement, in the first step, the stereoscopic object as the measurement object is three-dimensionally measured in the non-contact state to acquire the three-dimensional data on the measurement object. In the second step, the reference information serving as the reference in positioning of the measurement object relative to the measuring section for measuring the measurement object is pre-stored. In the third step, the position displacement amount and the angle displacement amount of the measurement object relative to the measuring section in the coordinate system of the measuring section are calculated, based on the three-dimensional data and the reference information. In the fourth step, the position displacement amount and the angle displacement amount are transformed into the adjusting parameter for use in performing the adjusting operation in the positioning. In the fifth step, the position and the angle of the measurement object are adjusted based on the adjusting parameter.

In the positioning method having the above arrangement, positioning between the measuring section and the measurement object is performed by adjusting the position and the angle of the measurement object, in other words, the positioning is performed by moving the measurement object without moving the measuring section. This enables to perform positioning without the need of a large space as an installation space or a moving space. Also, the relative position displacement amount and the relative angle displacement amount between the measuring section and the measurement object are automatically calculated based on the three-dimensional data and the reference information. This facilitates positioning without the need of a user's operation of designating a reference position. Since the position displacement amount and the angle displacement amount are transformed into the adjusting parameter to be used in the adjusting operation, the adjusting operation for the positioning can be performed easily both in automatic driving and manual operation by using the adjusting parameter. Also, the positioning is performed in a state that the measuring section is retained in the same posture as in actual measurement, without moving the measuring section i.e. without changing the position or the orientation of the measuring section. This prevents occurrence of a posture difference of the measuring section, thereby enabling to perform high-precision positioning. The three-dimensional data is acquired by three-dimensional measurement of the measurement object by the measuring section. In other words, use of the three-dimensional data on the measurement object in the adjusting operation of the position and the angle of the measurement object provides high-precision positioning, as compared with a case that positioning is performed based on two-dimensional data.

Preferably, the positioning method may further comprise: a sixth step of detecting a posture of the measurement object, wherein in the fourth step, a relational expression showing a relation between the coordinate system of the measuring section and a coordinate system of an adjusting section is calculated by using posture detection information obtained in the sixth step, and a position displacement amount and an angle displacement amount of the measurement object relative to the measuring section in the coordinate system of the measuring section is transformed into the adjusting parameter in the coordinate system of the adjusting section by performing a coordinate transformation based on the relational expression.

In the above arrangement, the posture of the measurement object is detected in the sixth step. Further, in the fourth step, the relational expression showing the relation between the coordinate system of the measuring section and the coordinate system of the adjusting section for performing the adjusting operation is calculated by using the posture detection information obtained in the sixth step, and the position displacement amount and an angle displacement amount of the measurement object relative to the measuring section in the coordinate system of the measuring section is transformed into the adjusting parameter in the coordinate system of the adjusting section by performing the coordinate transformation based on the relational expression.

In the positioning method having the above arrangement, the position displacement amount and the angle displacement amount obtained in the measuring section can be handled as the position displacement amount and the angle displacement amount in the adjusting section. This arrangement enables to realize the positioning by moving the measurement object without moving the measuring section, and to perform positioning with ease and high precision without the need of a large space.

Although the present invention has been adequately and fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

**Claims**

1.  A three-dimensional measuring device, comprising:

    a measuring section for three-dimensionally measuring a stereoscopic object as a measurement object in a non-contact state to acquire three-dimensional data on the measurement object;
    a storing section for pre-storing reference information serving as a reference in positioning between the measuring section and the measurement object;
    a displacement amount calculating section for calculating a position displacement amount and an angle displacement amount of the measurement object relative to the measuring section in a coordinate system of the measuring section, based on the three-dimensional data and the reference information; and
    an output section for outputting the position displacement and the angle displacement amount.

2.  A positioning system, comprising:

    a measuring section for three-dimensionally measuring a stereoscopic object as a measurement object in a non-contact state to acquire three-dimensional data on the measurement object;
    a storing section for pre-storing reference information serving as a reference in positioning between the measuring section and the measurement object;
    a displacement amount calculating section for calculating a position displacement amount and an angle displacement amount of the measurement object relative to the measuring section in a coordinate system of the measuring section, based on the three-dimensional data and the reference information;
    a transforming section for transforming the position displacement amount and the angle displacement amount into an adjusting parameter for use in performing an adjusting operation in the positioning; and
    an adjusting section for adjusting a position and an angle of the measurement object based on the adjusting parameter.

3.  The positioning system according to claim 2, further comprising:

    a posture detecting section for detecting a posture of the measurement object, wherein
    the transforming section calculates a relational expression showing a relation between the coordinate system of the measuring section and a coordinate system of the adjusting section by using posture detection information obtained by the posture detecting section, and transforms the position displacement amount and the angle displacement amount in the coordinate system of the measuring section into the adjusting parameter in the coordinate system of the adjusting section by performing a coordinate transformation based on the relational expression.

**4.** The positioning system according to claim 2 or 3, wherein
the measurement object is a reference stereoscopic object whose shape is known, the measurement object being used in performing calibration of the measuring section, and
the adjusting section adjusts the position and the angle of the reference stereoscopic object to perform the positioning in a stage before the calibration is performed.

**5.** The positioning system according to any one of claims 2 through 4, wherein
the adjusting section includes an automatic adjusting mechanism so that the adjusting section is automatically driven based on the adjusting parameter to perform the adjusting operation.

**6.** The positioning system according to any one of claims 2 through 4, further comprising:

an adjusting information notifying section for notifying a user of information relating to the adjusting parameter, wherein
the adjusting section includes a manual adjusting mechanism so that the adjusting section is driven to perform the adjusting operation by user's manipulation.

**7.** The positioning system according to any one of claims 2 through 6, wherein
the measurement object has a pyramidal frustum shape.

**8.** The positioning system according to any one of claims 2 through 6, wherein
the measurement object includes multiple spherical bodies arranged in a predetermined positional relation.

**9.** The positioning system according to any one of claims 3 through 8, further comprising:

an abnormality detecting section for detecting an abnormal operation of at least one of the measuring section, the displacement amount calculating section, the transforming section, the adjusting section, and the posture detecting section, and
an abnormality notifying section for notifying a user of information indicating the abnormal operation, if the abnormality detecting section detects the abnormal operation.

**10.** The positioning system according to any one of claims 2 through 9, wherein
the positioning system is configured of:

a measuring device as the measuring section;
a device to be measured including the measurement object, and the adjusting section operable to support the measurement object in such a manner that the position and the angle of the measurement object are changeable; and
an information processor internally provided with the storing section, the displacement amount calculating section, and the transforming section, the information processor being communicably connected to the measuring device and the device to be measured.

**11.** A positioning method, comprising:

a first step of three-dimensionally measuring a stereoscopic object as a measurement object in a non-contact state to acquire three-dimensional data on the measurement object;
a second step of pre-storing reference information serving as a reference in positioning of the measurement object relative to a measuring section for measuring the measurement object;
a third step of calculating a position displacement amount and an angle displacement amount of the measurement object relative to the measuring section in a coordinate system of the measuring section, based on the three-dimensional data and the reference information;
a fourth step of transforming the position displacement amount and the angle displacement amount into an adjusting parameter for use in performing an adjusting operation in the positioning; and
a fifth step of adjusting a position and an angle of the measurement object based on the adjusting parameter.

**12.** The positioning method according to claim 11, further comprising:

a sixth step of detecting a posture of the measurement object, wherein

in the fourth step, a relational expression showing a relation between the coordinate system of the measuring section and a coordinate system of an adjusting section is calculated by using posture detection information obtained in the sixth step, and a position displacement amount and an angle displacement amount of the measurement object relative to the measuring section in the coordinate system of the measuring section is transformed into the adjusting parameter in the coordinate system of the adjusting section by performing a coordinate transformation based on the relational expression.

# FIG.1

EP 1 923 663 A1

FIG.2A    FIG.2B    FIG.2C

# FIG.3

FIG.4

# FIG.5

POSITION OF ADJUSTING MECHANISM

CURRENT ANGLE OF Z-AXIS ROTATOR

O-DEGREE DIRECTION

Y

Z

X

# FIG.6

MAIN CONTROLLER — 40

MEASUREMENT DESIGNATOR — 41

MEASUREMENT INFORMATION RECEIVER — 42

DISPLACEMENT VECTOR CALCULATOR — 43

POSTURE DETECTION INFORMATION RECEIVER — 44

ADJUSTING PARAMETER CALCULATOR — 45

ADJUSTING PARAMETER TRANSMITTER — 46

REFERENCE INFORMATION STORAGE — 47

ERROR NOTIFIER — 48

# FIG.7

POINT I
(xc,yc,zc)

$\vec{K}$

REFERENCE
(xd,yd,zd)

A B D

# FIG.8

$\vec{N}$
$\vec{T}$

A B C D

# FIG.9

# FIG.10

## FIG.11

501
(ty1',tz1')
(ny1',nz1')
502 EXTRACTED PLANE

## FIG.12

START

MEASURE CALIBRATION CHART — S1

CALCULATE ADJUSTING PARAMETER — S2

TRANSMIT ADJUSTING PARAMETER
TO CALIBRATION DEVICE — S3

PERFORM ADJUSTMENT DRIVING
OF CALIBRATION CHART — S4

END

# FIG.13

```
( STEP S2 )
     │
     ▼
┌─────────────────────────────────────┐
│      RECEIVE MEASUREMENT DATA        │──── S21
└─────────────────────────────────────┘
     │
     ▼
┌─────────────────────────────────────┐
│      CALCULATE POSITION/ANGLE        │
│    DISPLACEMENT VECTOR IN MEASURING  │──── S22
│       DEVICE COORDINATE SYSTEM       │
└─────────────────────────────────────┘
     │
     ▼
┌─────────────────────────────────────┐
│  RECEIVE POSTURE DETECTION INFORMATION │──── S23
└─────────────────────────────────────┘
     │
     ▼
┌─────────────────────────────────────┐
│       TRANSFORM POSITION/ANGLE       │
│  DISPLACEMENT VECTOR INTO CALIBRATION│──── S24
│       DEVICE COORDINATE SYSTEM       │
└─────────────────────────────────────┘
     │
     ▼
┌─────────────────────────────────────┐
│      CALCULATE X-, Y-, Z-AXIS ANGLE  │
│   DISPLACEMENT AMOUNT IN CALIBRATION │──── S25
│       DEVICE COORDINATE SYSTEM       │
└─────────────────────────────────────┘
     │
     ▼
┌─────────────────────────────────────┐
│ CALCULATE ADJUSTING PARAMETER BASED  │
│  ON X-, Y-, Z-AXIS ANGLE DISPLACEMENT│
│   AMOUNT AND POSITION DISPLACEMENT   │──── S26
│    VECTOR IN CALIBRATION DEVICE      │
│        COORDINATE SYSTEM             │
└─────────────────────────────────────┘
     │
     ▼
  ( RETURN )
```

# FIG.14

(TOP PLAN VIEW)

702

701

700

(SIDE VIEW)

702

701

# FIG.15

MEASURING DEVICE

ORIENTATION OF
CALIBRATION CHART
(5 PATTERNS)

# FIG.16

MEASURING DEVICE

CALIBRATION CHART

FRAME

# FIG.17

901

904

902

903

**European Patent Office**

## EUROPEAN SEARCH REPORT

Application Number

EP 07 02 1698

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/058158 A (APPLIED PREC LLC [US]; SNOW DONALD B [US]; STROM JOHN T [US]; KRAFT RA) 17 July 2003 (2003-07-17) | 1,2,11 | INV.<br>G01B11/03<br>B25J9/16 |
| A | * page 8, lines 18-29; figures 1A,1B,4 *<br><br>* page 12, lines 15-22 *<br>----- | 3-6,9,<br>10,12 | |
| X | US 5 579 444 A (DALZIEL MARIE R [GB] ET AL) 26 November 1996 (1996-11-26) | 1 | |
| A | * column 27, line 46 - column 28, line 8; claim 13 *<br>----- | 2-6,9-12 | |
| X | US 6 064 756 A (BEATY ELWIN M [US] ET AL) 16 May 2000 (2000-05-16)<br>* column 5, line 37 - column 6, line 19 * | 1 | |
| A | * column 11, line 66 - column 12, line 55; figures 7A,7B *<br>----- | 8 | |
| X,P | EP 1 840 818 A (STANFORD RES INST INT [US]) 3 October 2007 (2007-10-03)<br>* paragraph [0042]; claim 5; figures 6A,6B * | 1 | TECHNICAL FIELDS SEARCHED (IPC)<br><br>G01B<br>B25J |

The present search report has been drawn up for all claims

| Place of search | Date of completion of the search | Examiner |
|---|---|---|
| Munich | 10 April 2008 | Dighaye, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                EP 07 02 1698

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2008

| Patent document cited in search report | | Publication date | Patent family member(s) | | Publication date |
|---|---|---|---|---|---|
| WO 03058158 | A | 17-07-2003 | AU<br>EP<br>JP | 2002357335 A1<br>1466137 A2<br>2005514606 T | 24-07-2003<br>13-10-2004<br>19-05-2005 |
| US 5579444 | A | 26-11-1996 | NONE | | |
| US 6064756 | A | 16-05-2000 | CN<br>EP<br>JP<br>US<br>WO<br>US<br>US | 1287643 A<br>1046127 A1<br>2002509259 T<br>6072898 A<br>9936881 A1<br>6064757 A<br>6862365 B1 | 14-03-2001<br>25-10-2000<br>26-03-2002<br>06-06-2000<br>22-07-1999<br>16-05-2000<br>01-03-2005 |
| EP 1840818 | A | 03-10-2007 | EP | 1849566 A2 | 31-10-2007 |

EPO FORM P0459

For more details about this annex : see Official Journal of the European Patent Office, No. 12/82

**EP 1 923 663 A1**

**Patent documents cited in the description**

- JP 2006306406 A

- JP 2000097636 A